# EUROPEAN PATENT APPLICATION

(11) **EP 0 961 420 A1**
(43) Date of publication of application: **01.12.1999**
(21) Application number: 98109435.2
(22) Date of filing: 25.05.1998
(51) Int. Cl.: H04B 7/195

(54) **Integrated geosynchronous orbit (GSO)/nongeosynchronous orbit (NGSO) Satellite communications system**

(71) Applicant: Hughes Electronics Corporation, El Segundo, California 90245-0956 (US)
(72) Inventor: Rosen, Stanley G., Los Angeles, CA 90045 (US)
(74) Representative: Lindner, Michael, Dipl.-Ing.

(57) **Abstract**

A satellite communications system combines geosynchronous orbit (GSO) and nongeosynchronous orbit (NGSO) satellites in an integrated satellite communications system to provide redundant, flexible communications links. In various implementations, the system includes transmission links between ground stations and satellites (10), among GSO satellites (12,14), among NGSO satellites and between GSO and NGSO satellites (12,14). Additionally, control over transmission paths may be centralized or distributed, terrestrial or orbiting.

## Description

### BACKGROUND OF THE INVENTION

### Field of the Invention

The invention is related to satellite communications systems and, more particularly, to a combination of geosynchronous orbit (GSO) and nongeosynchronous orbit (NGSO) satellites in a single communications system.

### Description of the Related Art

In a 1945 article prepared for "Wireless World", Arthur C. Clark (author of "2001, A Space Odyssey") observed that, "An 'artificial satellite' at the correct distance from earth would make one revolution every 24 hours, i.e., it would remain stationary above the same spot and would be within optical range of nearly half the Earth's surface. Three repeater stations, 120 degrees apart in the correct orbit, could give television and microwave coverage to the entire planet."

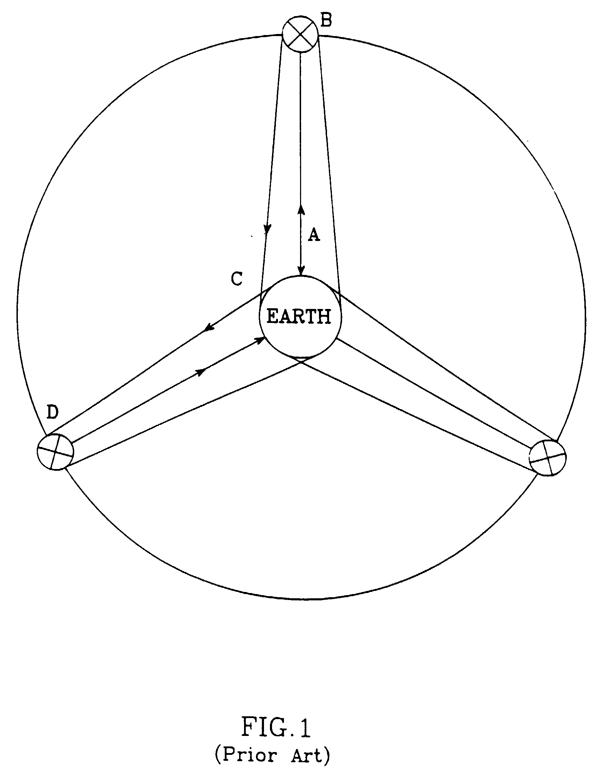

FIG.1 is a polar view of a communications system employing this model. Using such a system allows a user to transmit a signal ( e.g., video, voice, data, etc.) from one ground station A to a "repeater" satellite B to another ground station C within the repeater satellite's field of view. For communications outside a particular satellite's field of view, the ground station A transmits to the satellite B which relays the signal to the ground station C. The ground station C is in the field of view of both satellite B and another satellite D. Ground station C relays the signal to satellite D, which transmits it to a ground station E within its field of view. Each "uplink", including amplifiers, antennas, and modulators at the ground station and receivers aboard the satellite, typically operate within one frequency band while the downlink operates within another. Transponders aboard the satellites typically bandpass filter an incoming signal from a receiving antenna and amplify the resultant signal using a low noise amplifier.

The amplified signal is then down-converted by the transponder so that the signal occupies a different frequency band. This separation into transmitted and received signal bands prevents transmitted signals from interfering with received signals. After down-conversion, the transponder bandpass filters the down-converted signal and amplifies the resultant signal using a power amplifier such as a traveling wave tube amplifier.

Although the "ground-hopping" technique of FIG.1 has the appeal of simplicity, it is not without its problems. The volume of communications traffic has increased markedly since the first operational synchronous satellite, Syncom II, was launched July 26, 1963 and transmitted communications between a U.S. Army crew in Lakehurst New Jersey and a U.S. Navy crew aboard the *Kingsport*, at harbor in Lagos, Nigeria. Not only has the volume of traffic increased for existing applications such as voice traffic, new applications have evolved which place a huge demand upon satellite channel capacity. "Superstations" e.g., TBS™ originating in Atlanta and WGN™ originating in Chicago, reach homes worldwide, as do motion pictures that are distributed directly from satellites to homes. Additionally, the volume of data communications over satellite links continues to expand at a high rate.

Increased traffic volume led to revisions of the basic model illustrated in FIG.1. For example, each satellite in FIG.1 broadcasts over approximately 120 degrees of the Earth's surface within its field of view. Every terrestrial station receives the same signals within the same frequency band. However vast the frequency spectrum may seem, it is limited. And if, for example, one wishes to transmit one signal to one ground station using a given frequency channel, a different signal would be forced to use a different channel. The number of messages transmitted would therefore be limited, in a first order analysis, to the number of channels available within the frequency bands allotted to the satellite system. One method of expanding the capacity of a satellite communications system is to use narrow beam antennas to direct messages to smaller geographic areas. With this approach, channels of a given frequency may be re-used in different geographic locations within the view of each satellite.

The use of narrow beam antennas in combination with ground hopping has expanded the capacity or satellite systems. But capacity-related problems remain. Commonly used frequency bands are a 500 MHz band centered at 6 Ghz for satellite uplinks and a 500 MHZ band centered at 4 Ghz for downlinks. In these bands the equipment is relatively inexpensive, cosmic noise is low, and losses due to ionospheric scintillation and rainfall are relatively insignificant. However, terrestrial microwave links are already assigned to operate in these bands. To accommodate growing communications traffic, additional, less desirable, bands have been assigned; communications in the K-band employ 14 Ghz on the uplink and 12 Ghz on the downlink and direct-to-the-home television broadcasting uses a 17 Ghz uplink and a 12 Ghz downlink.

Even with this capacity expansion, satellite systems are once again confronting capacity limitations. The downlinks used to relay signals from satellites to ground stations often create bottlenecks, in part because these links must share their frequency band with terrestrial microwave transmission systems that can cause interference and in part because communications traffic from many parts of the world are essentially "funneled" through the downlinks, even though the ground station at the receiving end of the downlink may not be the ultimate target of the communications. Additionally, each "hop" entails a trip of approximately 70,000 km with a concomitant signal delay of approximately 240 ms. Although this delay may not be significant in some signal applications, interactive applications such as voice cannot practically accommodate more than a few such delays. Atmospheric distortions degrace signals as they hop from satellite to ground and on to another satellite. Each transit of a satellite may introduce further signal degradation in the form of phase noise, distortions and intermodulation products generated by the satellite's transponders. Depending upon the application and the initial signal quality, there may be a need for signal regeneration. Satellites which perform this regeneration are sometimes referred to as "processing" satellites. The additional functionality of processing satellites comes at a price and it is generally desirable to limit the number of processing satellites within a satellite system.

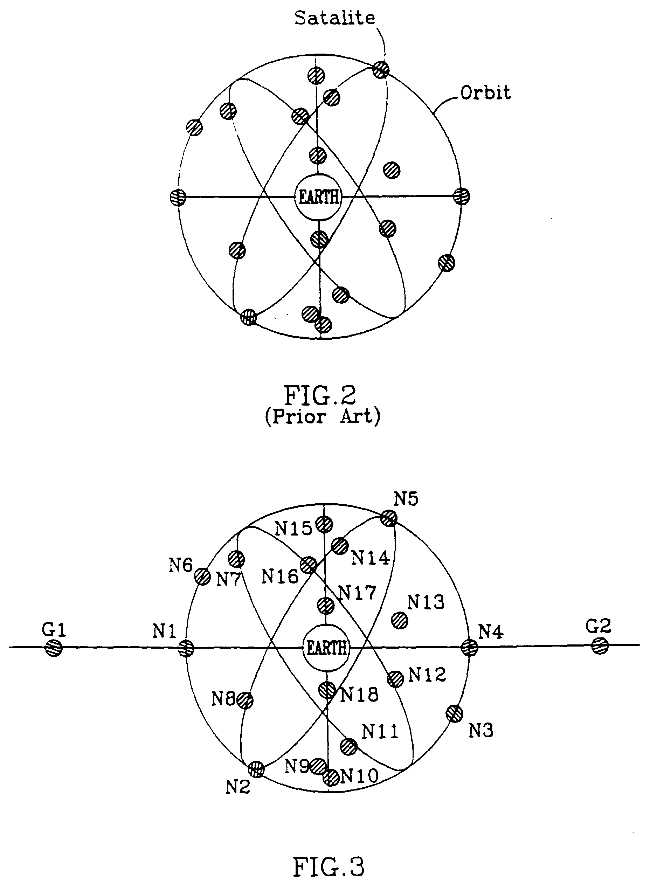

Additionally, GSO-based satellite communicationS systems are limited in that the line of sight to a satellite may be obstructed by buildings, hills, or other means. One way to overcome this limitation is by moving satellites into the otherwise obstructed field of view. NGSO satellites, since they are not syncronized with the Earth's rotation do just this. FIG. 2 provides a polar view of an NGSO satellite communications system. Satellites within the system appear as small circles surrounding a larger circle which represents the Earth. The satellites' orbits may be of various inclinations with the plane of the equator and a few are illustrated as circles or ellipses intersecting the satellites. As a NGSO satellite passes over the Earth, it provides coverage to locations below which otherwise may have been obscured.
However, an NGSO system generally requires a great many more satellites to provide sufficient "coverage", especially if full earth coverage is desired. Keeping in mind that more than 70% of the Earth's surface is covered by water and that only a small portion of the Earth's land area is inhabited, a large fraction of the NGSO satellites are out of direct contact with Earth-bound system users at any given time. Furthermore, the number of satellites required for full coverage increases rapidly as the satellite orbits are lowered and even more satellites are required, to provide some degree of fault tolerance.

### SUMMARY OF THE INVENTION

The invention is directed to a satellite communications system that provides global communications coverage in an efficient, flexible, fault-tolerant manner

The invention comprises at least one GSO satellite and one or more NGSO satellites combined to form an integral GSO/NGSO satellite communications system. Transmissions, whether, voice, video or data, from a transmitting station to a receiving station are routed through available transmission paths. The available transmission paths include those among NGSO satellites, those among GSO satellites (in those systems which include multiple GSO satellites) and those between GSO and NGSO satellites.

The paths from transmitting to receiving station may be predetermined in "bent pipe" fashion, with the each link specified and reserved before transmission commences or the paths may be determined "on the fly", with the transmission picking its way through the various available satellite links to reach its destination.

Additionally, control of signal routing may be centralized or distributed. If centralized, the control system may be housed in a few ground stations, a few satellites, or in a combination of ground stations and satellites. Similarly, if distributed, control may reside within ground stations, within satellites, or in a combination of the two.

Inter-satellite links may be effected through various forms of inter-satellite tracking and control which include gimbal-mounted mechanically steerable antennas, satellite pointing systems which re-orient the entire satellite in order to point it, and phased-array beam steering. Similarly, links between ground stations and satellites may be implemented in a variety of ways, including a "step and stare" approach in which a satellite boresight is fixed upon a location on the Earth for an extended period of time as the satellite moves in relation to the Earth then, after some time, the satellite "hands off" responsibility for maintaining communications with the geographical area below to another satellite which has come into the area. The first satellite then proceeds to point toward its next patch of coverage.

These and other features, aspects and advantages of the invention will be apparent to those skilled in the art from the following detailed description, taken together with the accompanying drawings.

### BRIEF DESCRIPTION OF THE DRAWINGS

FIG.1 is a polar view of a conventional GSO satellite communications system.
FIG.2 is a polar view of a conventional NGSO satellite communications system.
FIG.3 is an equatorial view of a new integrated GSO/NGSO satellite communications system.
FIG.4 is a polar view of the new GSO/NGSO satellite communications system of FIG.3.
FIGS.5A through 5C illustrate various details of interfaces employed by the new GSO/NGSO satellite system.
FIG.6 illustrates the location of system control functions in a centralized control implementation of the new GSO/NGSO satellite system.
FIG.7 illustrates the location of system control functions in a distributed control implementation GSO/NGSO satellite system.

### DETAILED DESCRIPTION OF THE INVENTION

The new satellite communications system integrates GSO and NGSO satellites in a single system to provide flexible, fault-tolerant, voice, data, video or other communications. Because the system combines GSO and NGSO satellites, it may be configured in a variety of ways to take advantage of the strengths and avoid the weaknesses of each satellite type.

In the equatorial view of the new GSO/NGSO satellite system provided by FIG.3, the GSO satellites G1 and G2 are at the left and right extremes, respectively, of the FIG. Although two GSO satellites are illustrated a system may include as few as one GSO satellite or, at the alternate extreme, substantially more than one GSO satellite. NGSO satellites N1-N18 inhabit orbits of various inclinations with respect to the equatorial plane. None of the illustrated distances, inter-satellite, NGSO satellite to Earth or GSO satellite to Earth are to scale and, although all the NGSO satellites N1-N18 appear to be at the same distance from Earth, they are illustrated in this manner just for the sake of clarity. The NGSO satellites may occupy any orbit from the Earth's surface to the approximately 23,000 mile orbit of the GSO satellites.

Satellites N1-N18 in NGSO have their own advantages and disadvantages. Nongeosynchronous orbits are sometimes, somewhat arbitrarily, categorized as either low earth orbit (LEO) or medium earth orbit (MEO), with LEO being somewhere in the hundreds of miles from Earth and MEO being in the 5,000-12,000 mile range. Although this categorization is arbitrary, it proves useful in the discussion of satellite properties. For example,the orbit period of a LEO satellite is approximately 1.5 Hrs., it is typically in the line of sight of an earth station for approximately .35 Hrs. and the round-trip delay for a signal transmitted to the satellite from a ground station is approximately 2 msec. The orbit period of a MEO satellite is approximately 5-12 Hrs., it is typically in the line of sight of an earth station for 2-4 Hrs., and the round trip delay for a signal from a ground station is on the order of 100 msec.

One advantage to using NGSO satellites is that, because of their lower orbits, earth stations, especially those which employ omnidirectional antennas, may use lower power transmitters with low earth orbit satellites. Lower-power operation is particularly useful in portable and hand-held applications, which might include "wrist-watch" communications systems, digital personal assistants, paging devices, etc. Additionally, the delay between transmission and reception is lower for NGSO systems: a negligible few msec. for a transmission through a satellite in a 100 mile orbit. Satellites N1-N18 may occupy orbits at any distance or combination of distances according to the demands of a particular application.

Furthermore, although satellite communications systems have been employed for some time, their area of application appears poised to undergo a radical expansion. Not only do individual "superstations" and news channels broadcast through satellites to reach millions of cable television subscribers, more recent developments, including the use of relatively small satellite receiving antennas, have allowed many millions of subscribers to avoid cable television hookups by receiving satellite broadcasts directly. Additionally, by employing various capacity expansion techniques (e.g.,narrow beam antennas, multiple beam-polarizations) satellite systems may eventually provide sufficient interconnectivity and bandwidth to make practical the implementation of such elusive applications as a full motion "video telephone". Satellite systems may also permit the implementation of true video-on-demand systems that, in contrast to the limited,"top 40" selection available at many video rental scores, would permit a subscriber to "dial up" a video archive, or server, and download any one of the thousands of motion pictures, short subjects, documentaries or "independent" films, obscure or classic, that have been produced over the past century. Bidirectional data transfer applications also abound: bank transfer, stock market transactions, and other financial transactions are implemented through satellite communications systems. In order to provide such services, land-based systems require the costly installation of much higher capacity lines than the copper wires which are most widely employed currently.

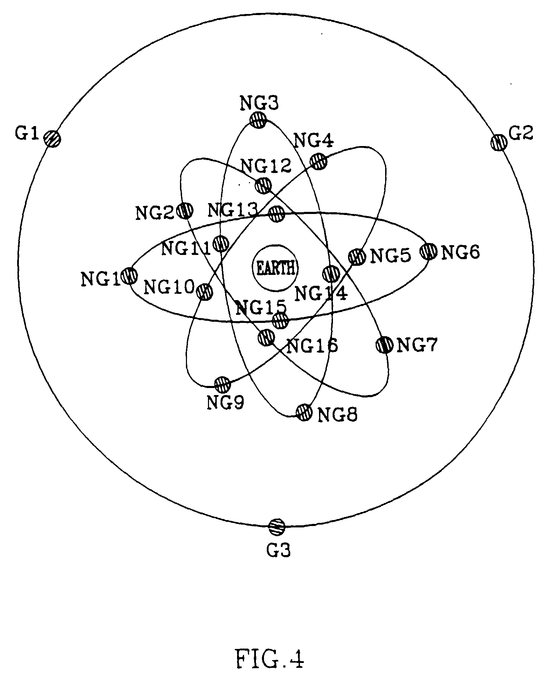

A polar view of the new GSO/NGSO satellite system is provided by FIG.4. The reference designators for the NGSO satellites have been modified relative to those of FIG.3 for the sake of simplicity so that the NGSO satellites are now labeled NG1-NG16. An additional GSO satellite G3, which was obscured in the view of FIG. 3, may be seen in this view. NGSO satellites such as satellites NG1-NG16 of FIG.4 and N1-N18 of FIG.3 provide many advantages for the implementation of highly portable communications systems. To make handheld or wrist-watch-satellite communications systems practical, the portable transmitter's power requirement must be held to a minimum. That is, a "wrist-watch" communicator which employs a battery so large that a backpack is required to carry the battery does not represent an optimal solution. Although power requirements could be reduced by employing a tracking antenna, that too is impractical for hand-held or wrist-watch applications. Since the signal power reaching a satellite from an omnidirectional ground antenna is inversely proportional to the square of the distance between the ground-based antenna and the satellite, reducing the distance from a ground-based antenna to satellite from the 23,000 miles of a GSO satellite to the 100 miles of a low earth orbit NGSO would reduce the power requirement for the ground-based transmitter by more than six orders of magnitude. The satellites NG1-NG16 would preferably be situated in LEO for use with highly portable communications systems.

Transmission delays associated with LEO satellites are also negligible, especially compared to those associated with GSO satellites such as satellites G1-G3. Furthermore, although transmission delays may be somewhat annoying in voice applications, they are not so bad as to prohibit the use of GSO systems for voice transmissions. However, some data transmission applications, especially those involving networks such as the internet, may be less well suited to GSO implementations because the delays associated with GSO satellite systems complicate the effective control of connections through such familiar mechanisms as the "handshaking" that goes on between terminals to establish a data communications link. Additionally, buildings or natural structures may obstruct the line of sight between a GSO satellite G1,G2 and a given location from which one desires to communicate. NGSO satellite systems, because of the motion of the satellites NG1-NG16 relative to the Earth and because of the redundancy typically built into the system, can, literally "get around" the problem of obstructions. Additionally, there is typically less signal loss, due to weather fading, for example, associated with the use of NGSO satellites such as satellites NG1-NG16. For a given set of design requirements NGSO satellites and LEO satellites, in particular, offer a lower bit error rate, higher signal to noise ratio and lower weather losses than GSO satellites G1-G3.

NGSO satellites such as satellites NG1-NG16 are not without their drawbacks. For those NGSO applications which forgo the use of an omnidirectional antenna, tracking antennas, with their attendant increase in costs, are employed. And, although, there are methods available to effectively "hand off" coverage from one satellite to another as one satellite leaves a coverage area and another enters it, this process increases the complexity and expense of a system which employs it. Furthermore, in a marked contrast to a GSO-based system which may provide global coverage with just three satellites, a NGSO system employing orbits at approximately 100 miles would require something in the neighborhood of 1000 satellites for global coverage with some degree of fault tolerant redundancy. Since the total number of operating satellites extant today is only around 600, launching, operating and maintaining nearly twice that number for a single system entails a significant undertaking, to say the least. Additionally, a LEO-based system such as this would typically employ a great many more inter-satellite transmissions, with concomitant signal losses at each satellite transit, than a higher-orbit system would employ for a given signal point of origin and destination. Additionally, some of the frequency bands employed by LEO systems typically support only limited data rates.

The novel integrated GSO/NGSO satellite communications systems of FIGs.3 and 4 permit one to use each type of satellite to its best advantage and, by combining the two types of satellite in one system, allows a satellite system integrator to trade off the cost and performance options of each type of satellite, one against the other. For example, the satellites N1-N18 may be placed in low earth orbit to receive relatively low-powered transmissions from a portable transmitter with omnidirectional antenna. For long distance transmission, the LEO satellite may then relay the signal to a higher orbit satellite such as a MEO or GSO satellite.

Furthermore, since some degree of redundancy must be built in to a satellite communications system. The losses associated with the complete failure of a financial transaction communications system would be intolerable to a system operator. Therefore, more than the minimum number of satellites required to provide global coverage would typically be launched so that the loss of one or more satellites would not bring the entire system down. As noted above, fault-tolerant redundancy is one of the factors that motivates the use of so many satellites in a purely LEO system. In the novel system of FIG.3 however, a GSO satellite G1,G2 may provide emergency backup for any number of NGSO satellites N1-N18.

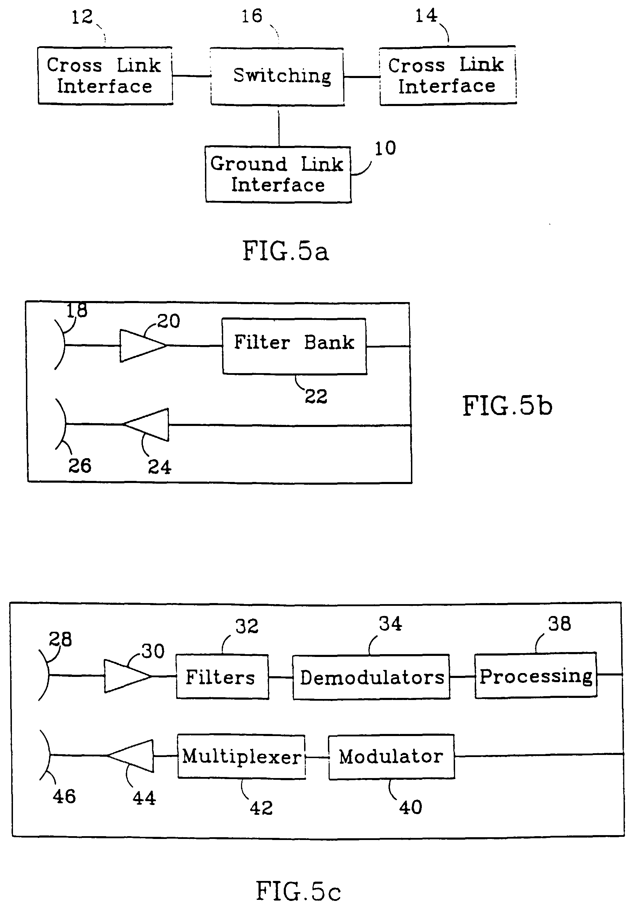

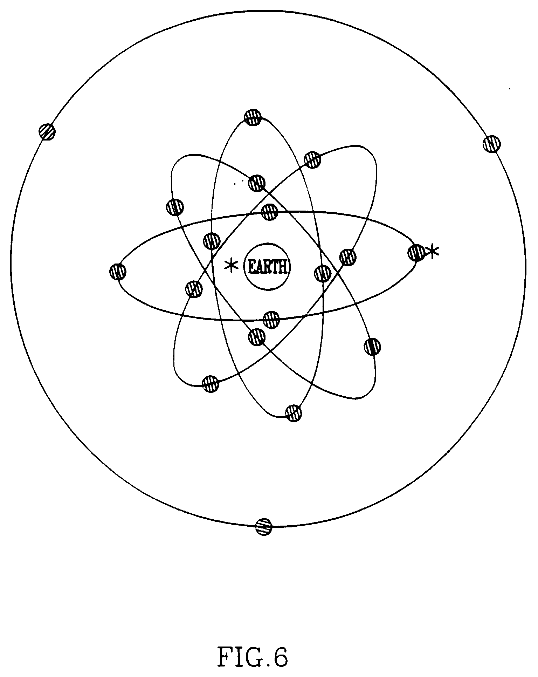

The basic operational systems of any of the communications satellites, N1-N18, NG1-NG16 or G1-G3 are illustrated in the block diagram of FIG. 5A. Communications satellites and their interfaces are known in the art; a more detailed description of the filtering, multiplexing, modulation, switching etc. may be found, for example, in, James Martin, Telecommunications and the Computer, Prentice Hall, Englewood Cliffs, New Jersey, 1976, pages 280-301. In the diagram of FIG.5A, a ground link interface 10 operates to provide an uplink, a downlink or both, between the satellite and a ground station such as ground station A illustrated in FIG.1. Similarly, crosslink interfaces 12 and 14 provide for communications between satellites e.g., between satellites N1 and satellite G1 of FIG.3. The switching block 16 routes the flow of communications from one interface to another and, as will be discussed in relation to FIG.6, control of this routing may be centralized or distributed, terrestrial or satellite-borne, or any combination of the above.

FIG.5B illustrates an increase such as 10-14 of FIG 5A, in greater detail. The illustrated interface of FIG.5B is employed in satellites which are essentially "bent pipe" relays, i.e., the satellites perform no processing on received signals and simply relay them to another satellite or ground station. A receiving antenna 18 receives signals which typically have been multiplexed into a specified frequency bane and relays the signals to a receiver 20. From the receiver, the signals are sent to a filter bank 22 which separates the various signals and their carriers. These are sent to a switching block such as switch 16 of FIG.5A for routing to another interface. Signals coming from the switch 16 are connected to a transmitter 24 which sends the signals to a transmitting antenna 26. Various methods are employed to direct the antennas 18 and 26 toward their intended mating antenna,e.g., a receiving antenna in the case of a transmitting antenna. The antennas may be gimbal mounted and mechanically steered to direct the boresight of the antenna towards a mating antenna, for example, or the entire satellite may be oriented to properly direct the antenna's boresight. Alternatively, a phased array antenna may be employed, to use the phase relationship between multiple transmissions to steer a signal to a mating antenna.

An interface used in processing satellites, i.e. those which demodulate received signals and perform signal conditioning, compression, or regeneration, etc., is illustrated in FIG.5C. A receiving antenna 28 receives transmissions from another satellite or a ground station and passes the signal to a receiver 30. The receiver 30 then passes the signal to a filter bank 32 which separates the received transmission into individual frequency bands. Demodulators 34 demodulate the signals and pass them to a processing subsystem 38 which may perform signal conditioning, regeneration, etc. upon the recovered signals. From the processing subsystem 38, the signals are passed to a switching block, such as block 16 shown in FIG.5A, which routes the signals as described in relation to FIG 5A.

On the transmitting side, signals received from a switching block 16 for transmission are routed to a modulator 40 where they are combined with carrier frequencies for transmission. The modulated signals are passed to a multiplexer 42 which combines the modulated signals and passes the resultant signal to a transmitter 44 that employs an antenna 46 to transmit the signals to a ground station or to another satellite. One satellite may have several narrow beam antennas directed toward different locations on the Earth's surface (with accompanying transmitters, modulators and multiplexers, where appropriate) and one or more of the NGSO satellites of the new integrated GSO/NGSO system may include one or more crosslink interfaces to one or more GSO satellites and one or more GSO satellites may include crosslink interfaces to one or more NGSO satellites. The link between GSO and NGSO satellites may be established and maintained using conventional tracking techniques in conjunction with the steering techniques just discussed.

The polar view of the new GSO/NGSO satellite communications system of FIG.6 is as presented in FIG.4, except that in this view the location of control functions is highlighted with the use of asterisks. One asterisk, on the surface of the Earth, indicates that centralized control of signal routing resides on the Earth, within a ground station, for example. The terms centralized and distributed as they are used in this specification are relative terms, without sharp delineations, as they are in most communications and computer-related literature. In this context centralized control is meant to imply that the routing of signals, from ground station, through one or more satellites within the GSO/NGSO satellite communications system and back to a ground station is determined, by a relatively small number of controllers which may reside within a few ground stations. Alternatively, as illustrated by the asterisk located next to a satellite within FIG.6, control may be centralized within one or more satellites or within a combination of a few satellites and/or ground stations.

In addition to the fact that centralized control may be located in a number of locations, it may take a number of forms. For example, a central controller may keep track of all the orbit information of all the satellite within a system. Then, when a transmission is received at one satellite, the controller may "map out" the most appropriate path for the transmission signal to take based upon the orbit information the controller contains. Alternatively, a specific signal path may be pre-allotted at given time for a given signal. In either case, the most appropriate path will be one which reduces delays attributable to switching and to path length while, at the same time, minimizing signal degradation due to atmospheric distortions and to the communications systems' components. Additionally, the controller will take into account the availability of various satellite links in order to map out the preferred path. Ultimately, the capacity of each link and the cost of establishing the various paths through the system will be factored into the decision as well.

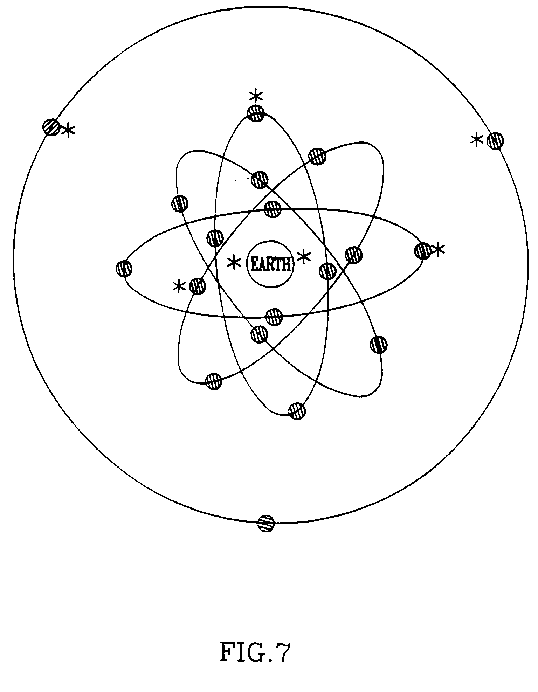

The asterisks of FIG.7, more numerous than those of FIG.6, are meant to illustrate a distributed control embodiment of the new GSO/NGSO satellite communications system. Each asterisk indicates the location of a part of the system's signal-routing central function. In an extreme of control distribution each of the communications links within the system may be said to posses some fraction of the system's signal-routing control. That is, each satellite and each ground station would include a component of the system's signal routing control. For example, a portable ground station may query one or more satellites "in the direction of" a desired transmission. Each of the queried satellites may then return an "available" or "not available" response. Then, the ground station would transmit to whatever satellite(s) is(are) available and the receiving satellite would transmit the signal further in the direction of the signal's destination. Alternatively, each satellite and each ground station could maintain availability information for a number of neighboring satellites in order to reduce the query/response overhead associated with this scenario of operation.

Whether control is distributed or centralized, the system will preferably include coping mechanisms for rerouting a signal whenever a preferred route fails. The failure may be temporary, e.g., due to one or more satellites operating at full capacity or it may be permanent, due to the loss of a satellite. In either case, the query/response approach accommodates these failures more or less automatically by simply routing signals to available satellites. Other known techniques, such as "watchdog time-outs", error detection techniques, etc. may be employed to determine the failure of a link which may then be circumvented by the system. In either a centralized or distributed control system, the path chosen, e.g., using exclusively GSO satellites, using exclusively NGSO satellites, or using any combination of the two, will reflect the availability of particular paths, the cost of various configurations, the impact each path has on signal quality, latency, path length, and the delays due to switching and transmission.

The forgoing description of specific embodiments of the invention has been presented for the purposes of illustration and description. It is not intended to be exhaustive or to limit the invention to the precise forms disclosed, and many modifications and variations are possible in light of the above teachings. For example, the satellite orbits may be oriented at various inclinations to the plane of the equator to accommodate various systems requirements such as cost, coverage and fault-tolerance. The embodiments were chosen and described in order to best explain the principles of the invention and its practical application, to thereby enable other skilled in the art to best utilize the invention. It is intended that the scope of the invention be limited only by the claims appended hereto.

The present invention discloses a satellite communications system which combines geosynchronous orbit (GSO) and nongeosynchronous orbit (NGSO) satellites in an integrated satellite communications system to provide redundant, flexible communications links. In various implementations, the system includes transmission links between ground stations and satellites 10, among GSO satellites 12,14, among NGSO satellites and between GSO and NGSO satellites 12,14. Additionally, control over transmission paths may be centralized or distributed, terrestrial or orbiting.

## Claims

1. An integrated geosynchronous orbit (GSO)/nongeosynchronous orbit (NGSO) satellite communications system, comprising:
at least one GSO communications satellite (Gx), and
NGSO satellites (NGx), said GSO and NGSO satellites configured to have a communications link between at least one satellite and a ground station.

2. The communications system of claim 1, characterized by a communications link between at least one of said NGSO satellites (NGx) and at least one GSO (Gx) satellite.

3. The communications system of claims 1 or 2, characterized by at least one crosslink between NGSO satellites (14).

4. The communications system of any of claims 1 through 3, characterized in that said GSO communications satellite includes a groundlink interface (10).

5. An integrated geosynchronous orbit (GSO)/nongeosynchronous orbit (NGSO) satellite communications system, comprising:
at least one ground station,
at least three GSO communications satellites (Gx) positioned in orbit approximately one hundred and twenty degrees apart, and
NGSO satellites (NGx), said GSO and NGSO satellites configured to maintain a communications link between at least one of said satellites and a ground station at substantially all times.

6. The communications system of claim 5, characterized in that said satellites are configured to maintain a communications link between at least one of said NGSO (NGx) and one of said GSO satellites (Gx) at substantially all times.

7. The communications system of claim 6, characterized by at least one crosslink (12) between NGSO satellites.

8. The communications system of any of claims 5 through 7, characterized by at least one ground station and wherein at least one of said GSO communications satellites (Gx) includes a groundlink (10).

9. A method of providing satellite-based communications through at least one satellite forming a part of a satellite constellation, comprising the steps of:
A) launching a plurality of satellites into nongeosynchronous orbit (NGSO),
B) launching at least one satellite into geosynchronous orbit (GSO),
C) establishing at least one satellite downlink (10) between said satellites and a ground station, and
D) receiving, by at least one of said satellites, signals in the form of electromagnetic radiation.

10. The method of providing satellite-based communications of claim 9 further comprising the step of:
E) establishing, through satellite crosslink interfaces, at least one satellite crosslink (14) between said GSO and NGSO satellites.
